# EUROPÄISCHE PATENTSCHRIFT

(11) **EP 3 628 524 B1**
(45) Veröffentlichungstag und Bekanntmachung des Hinweises auf die Patenterteilung: **25.08.2021**
(21) Anmeldenummer: 19198499.6
(22) Anmeldetag: 20.09.2019
(51) Int. Cl.: B60K 17/354, B60K 17/356

(54) **ANTRIEBSSYSTEM MIT VARIABLER SPERRDIFFERENTIAL-FUNKTION**
DRIVE SYSTEM WITH VARIABLE LOCKING DIFFERENTIAL FUNCTION
SYSTÈME D'ENTRAÎNEMENT À FONCTION DIFFÉRENTIELLE BLOQUANT VARIABLE

(30) Priorität: 28.09.2018 DE 102018124020
(43) Veröffentlichungstag der Anmeldung: 01.04.2020
(73) Patentinhaber: MAN Truck & Bus SE, 80995 München (DE)
(72) Erfinder: Beierer, Philipp, 85302 Gerolsbach (DE); Resch, Franz-Georg, 82299 Türkenfeld (DE)
(74) Vertreter: v. Bezold & Partner Patentanwälte - PartG mbB

(56) Entgegenhaltungen:
- EP-A2- 2 759 438
- DE-A1- 3 635 095

## Beschreibung

Die Erfindung betrifft ein Antriebssystem für ein Kraftfahrzeug, insbesondere ein Nutzfahrzeug, z. B. einen Lastkraftwagen oder einen Omnibus, einen Kleintransporter, ein Kraftfahrzeug mit mehr als 3,5 t-Gesamtmasse und/oder ein Kraftfahrzeug mit mehr als acht Sitzplätzen außer dem Fahrersitz.

Aus dem Stand der Technik sind Nutzfahrzeuge bekannt, die hydraulische Radmotoren zum Antreiben zumindest zweier Räder aufweisen. Die zwei Radmotoren sind üblicherweise in einen geschlossenen hydrostatischen Kreislauf integriert. Bei unterschiedlichen Untergrundverhältnissen mit stark abweichenden Reibfaktoren zwischen Rad und Untergrund und/oder aufgrund plötzlich ändernder Radlasten kann es sein, dass ein Rad eine ausreichende Traktion aufweist, während ein anderes Rad eine stark verminderte Traktion aufweist oder die Traktion im Wesentlichen ganz verliert. Ohne geeignete Gegenmaßnahmen wird der Ölstrom auf den Radmotor geleitet, der dem Rad mit verminderter oder verlorener Traktion zugeordnet ist. Da sich in diesem Fall kein oder zu wenig Druck an dem Radmotor aufbaut, der dem Rad mit ausreichender Traktion zugeordnet ist, ist z. B. ein Steckenbleiben oder allgemein ein beeinträchtigendes Anfahren des Nutzfahrzeugs möglich.

EP 1 886 861 A2 und EP 2 559 581 A2 widmen sich dieser Problemstellung. Beiden Patentanmeldungen ist der Grundgedanke gemeinsam, dass ein jeweils durchdrehendes Rad auf die Drehzahl des langsamer drehenden oder gar stehenden Rades verlangsamt werden kann, was durch eine Sperrdifferential-Funktion und somit eine hydraulische Quersperre realisiert wird.

Eine hydraulische Quersperre mit der Zielgröße des synchronen Gleichlaufs ("50:50") von linkem Rad und rechtem Rad führt prinzipbedingt zu einem schlechten Kurvenfahrverhalten. Da die Räder bzw. die Radmotoren mittels der Quersperre im Wesentlichen starr miteinander verbunden sind, neigt das Nutzfahrzeug insbesondere bei einer hydrostatisch angetriebenen Vorderachse zum Untersteuern. Es neigt während einer Kurvenfahrt demnach tendenziell zum Geradeausfahren, so dass zweckmäßig der Fahrer des Nutzfahrzeugs stärker lenken muss, als es dem eigentlichen Kurvenradius entspricht.

Dokument EP 2 759 438 A2 offenbart einen Fahrzeugantrieb für ein Fahrzeug mit einem Hauptantrieb für das Fahrzeug, einem hydrostatischen Hilfsantrieb für das Fahrzeug und mit einer Steuereinheit, die mindestens eine Betriebsgröße des Fahrzeugs erfasst. Die Steuereinheit steuert bzw. regelt den hydrostatischen Hilfsantrieb in Abhängigkeit von der mindestens einen Betriebsgröße automatisch.

Dokument DE 36 35 095 A1 offenbart ein Verfahren zur Vortriebsregelung eines Kraftfahrzeugs, bei dem nach Bedarf nur eine der Radbremsen aktiviert oder das Motordrehmoment verringert wird. Dabei wird nach Art einer adaptiven Regelung in ständiger Wiederholung aus gemessenen Drehzahlen und abgespeicherten Fahrzeug- und Motordaten für jedes angetriebene Rad das dessen Durchdrehen bewirkende Überschussmoment und anschließend für jedes der angetriebenen Räder das für die Beseitigung des Durchdrehens/der Durchdrehneigung erforderliche Reduktionsmoment ermittelt und in Abhängigkeit von der jeweiligen Fahrsituation entweder betragsmäßig richtig als Bremsmoment und/oder aber betragsmäßig richtig als Verringerung des Motordrehmomentes zur Wirkung gebracht.

Eine Aufgabe der Erfindung ist es, ein Antriebssystem für ein Kraftfahrzeug mit einem oder mehreren hydraulischen Motoren und einer Sperrdifferential-Funktion zum Traktionsausgleich zu schaffen, das ein besseres Kurvenfahrverhalten ermöglicht.

Diese Aufgabe kann mit den Merkmalen der unabhängigen Ansprüche gelöst werden. Vorteilhafte Weiterbildungen der Erfindung können den Unteransprüchen und der folgenden Beschreibung bevorzugter Ausführungsformen der Erfindung entnommen werden.

Die Erfindung schafft ein Antriebssystem für ein Kraftfahrzeug, insbesondere ein Nutzfahrzeug. Bei dem Kraftfahrzeug, insbesondere Nutzfahrzeug, kann es sich z. B. um einen Kleintransporter, ein Kraftfahrzeug mit mehr als 3,5 Tonnen Gesamtmasse und/oder ein Kraftfahrzeug mit mehr als acht Sitzplätzen außer dem Fahrersitz handeln.

Das Antriebssystem dient insbesondere zur Reduzierung der Untersteuerungsneigung eines Kraftfahrzeugs, insbesondere durch Ermöglichung asynchroner Drehzahlen (z. B. Abrolldrehzahlen) für zumindest zwei über eine Sperrdifferential-Funktion miteinander in Verbindung stehende Räder einer insbesondere hydrostatisch angetriebenen Achse des Kraftfahrzeugs, insbesondere während einer Kurvenfahrt des Kraftfahrzeugs.

Das Antriebssystem umfasst vorzugsweise mindestens eine erste Achse, die z. B. über einen Antriebsstrang zweckmäßig mechanisch antreibbar ist.

Das Antriebssystem umfasst ferner mindestens eine zweite Achse, der mindestens ein vorzugsweise hydraulischer, insbesondere hydrostatischer Motor zum Antreiben zumindest zweier Räder zugeordnet ist. Es ist möglich, dass der zumindest einen Motor zum Antreiben der zumindest zwei Räder einen zweckmäßig hydraulischen (z. B. hydrostatischen) Achsmotor oder mindestens zwei zweckmäßig hydraulische (z. B. hydrostatische) Radmotoren umfasst.

Die zwei Räder sind folglich insbesondere einer hydrostatisch angetriebenen Achse zugeordnet.

Die zwei Räder entsprechen z. B. einem linken Rad und einem rechten Rad und/oder während einer Kurvenfahrt des Kraftfahrzeugs einem inneren Rad und einem äußeren Rad.

Die zwei Räder können lenkbare oder nicht lenkbare Räder sein.

Bei einer besonders bevorzugten Ausführungsform der Erfindung ist jeweils ein Radmotor jeweils zumindest einem der zumindest zwei Räder zugeordnet.

Das Antriebssystem ist zweckmäßig mit einer Sperrdifferential-Funktion zum vorzugsweise vollständigen oder zumindest teilweisen Traktionsausgleich für die zwei Räder ausgestattet.

Die Sperrdifferential-Funktion kann z. B. im Wesentlichen wie in der EP 1 886 861 A2 bzw. der EP 2 559 581 A2 beschrieben realisiert werden, so dass der Inhalt dieser Patentanmeldungen der vorliegenden Offenbarung in vollem Umfang zuzurechnen ist.

Das Antriebssystem zeichnet sich insbesondere dadurch aus, dass die Sperrdifferential-Funktion variabel ist, um während einer Kurvenfahrt des Kraftfahrzeugs unterschiedlich schnelle Drehzahlen für die zumindest zwei Räder zu ermöglichen, so dass vorzugsweise während einer Kurvenfahrt ein asynchroner Lauf der zumindest zwei Räder darstellbar ist und/oder asynchrone Drehzahlen für die zumindest zwei Räder darstellbar sind.

Mittels der Erfindung kann folglich der Zwang eines synchronen Gleichlaufs ("50:50") der zwei Räder während einer Kurvenfahrt des Kraftfahrzeugs aufgelöst werden. Die zwei Räder sind durch die variable Sperrdifferential-Funktion zweckmäßig nicht mehr miteinander starr wirk-verbunden. Vielmehr können mittels der variablen Sperrdifferential-Funktion individuelle Drehzahlen (z. B. Abrolldrehzahl, Abrollumfang, Spur etc.) der zwei Räder abgebildet werden.

Die eigentliche Sperrdifferential-Funktion zum Traktionsausgleich bleibt allerdings zweckgemäß erhalten.

Es ist möglich, dass die variable Sperrdifferential-Funktion abhängig von einem Lenkwinkel des Kraftfahrzeugs variabel ist und somit die variable Sperrdifferential-Funktion unter Berücksichtigung eines Lenkwinkels betrieben werden kann. Basierend auf Kraftfahrzeugdaten, insbesondere Radstand und Spurweite des Kraftfahrzeugs, kann eine Steuereinrichtung (z. B. Fahrzeugrechner etc.) zusammen mit der Information eines Lenkwinkels für jedes Rad eine theoretische Drehzahl bzw. Soll-Drehzahl, insbesondere Abrolldrehzahl, berechnen, so dass dieser Wert für jedes Rad als individuelle Steuergröße für die variable Sperrdifferential-Funktion dienen kann.

Im Rahmen der Erfindung kann es zweckmäßig ausreichen, einen Lenkwinkel eines Rades für eine Kurvenfahrt zu kennen. Aus geometrischen Zwangsbedingungen kann daraus auf einen oder mehrere Lenkwinkel anderer Räder geschlossen werden. Es kann ebenfalls ein Gesamt-Lenkwinkel, der aus einem Mittelwert der Lenkwinkel mehrerer Räder gebildet wird, für die variable Sperrdifferential-Funktion genutzt werden.

Die variable Sperrdifferential-Funktion kann insbesondere ausgeführt sein, um während einer Kurvenfahrt ein zu schnell drehendes Rad der zwei Räder zu verlangsamen. Das kann z. B. durch Reduzierung eines Hydraulikflüssigkeit-Volumenstroms (z. B. Ölflusses) zu dem hydraulischen Motor des zu schnell drehenden Rades realisiert werden oder durch Abbremsen mittels eines Bremseneingriffs des zu schnell drehenden Rades.

Das Antriebssystem kann eine z. B. elektronische Steuereinrichtung zum Steuern, insbesondere Regeln, der variablen Sperrdifferential-Funktion aufweisen.

Die Steuereinrichtung kann z. B. ein Steuergerät, einen Kraftfahrzeugrechner, eine Regeleinheit etc. umfassen. Die Steuereinrichtung kann durch eine einzige, z. B. zentrale, Steuereinheit realisiert werden oder durch mehrere miteinander verbundene und/oder getrennt voneinander arbeitende Steuereinheiten.

Es ist möglich, dass die Steuereinrichtung zum Berechnen einer zweckmäßig individuellen Soll-Drehzahl für jedes der zwei Räder für die Kurvenfahrt ausgeführt ist, und zwar vorzugsweise unter Berücksichtigung eines Lenkwinkels des Kraftfahrzeuges.

Die variable Sperrdifferential-Funktion ist vorzugsweise über einen geschlossenen Regelkreis regelbar.

Als Steuergröße für die variable Sperrdifferential-Funktion kann insbesondere ein Verhältnis der z. B. für eine Kurvenfahrt bestimmten Soll-Drehzahlen für die zumindest zwei Räder dienen.

Es ist erfindungsgemäß vorgesehen, dass ein hydraulischer Mengenstromteiler mit einem Verstellelement (z. B. einem verstellbaren Ventilkolben) für die variable Sperrdifferential-Funktion und vorzugsweise die Sperrdifferential-Funktion zum Traktionsausgleich zuständig ist.

Es ist möglich, dass das Verstellelement z. B. eine variable Aufsplittung eines Hydraulikflüssigkeit-Volumenstroms ermöglichen kann, vorzugsweise zu den hydraulischen Motoren. Das Verstellelement ist vorzugsweise Bestandteil des Mengenstromteilers, z. B. ein Steuerkolben in einem Wege- oder Proportionalventil.

Der Mengenstromteiler kann mit Freilauffunktion oder ohne Freilauffunktion ausgeführt sein. Der Mengenstromteiler kann z. B. als Proportionalventil ausgeführt sein. Es ist möglich, dass das Verstellelement durch die Steuereinrichtung elektroproportional beeinflussbar ist.

Die Steuergröße kann zweckmäßig mittelbar oder unmittelbar auf das Verstellelement wirken.

Als Steuergröße kann z. B. ein Verhältnis von Soll-Drehzahlen für die zumindest zwei Räder zweckmäßig für eine Kurvenfahrt dienen.

Es ist erfindungsgemäß vorgesehen, dass das Verstellelement zumindest so lange eingeregelt wird, bis ein Verhältnis vorzugsweise gemessener Ist-Drehzahlen der zumindest zwei Räder zumindest im Wesentlichen einem Verhältnis der Soll-Drehzahlen der zumindest zwei Räder entspricht. Hierzu können z. B. mittels einer oder mehrerer Messeinrichtungen oder auf andere geeignete Weise die Ist-Drehzahlen der zwei Räder gemessen werden und das Verstellelement zumindest so lange verstimmt werden, bis die Ist-Größe zumindest im Wesentlichen der Soll-Größe entspricht. Mit "Verstimmen" ist dabei insbesondere gemeint, dass die Ansteuerung des Verstellelements darauf abzielt, die Abweichung von "IST" zu "SOLL" zu reduzieren.

Alternativ oder ergänzend ist vorgesehen, dass das Verstellelement zumindest so lange eingeregelt wird, bis eine vorzugsweise gemessene Ist-Position des Verstellelements zumindest im Wesentlichen einer Soll-Position des Verstellelements entspricht, z. B. ein vorzugsweise gemessener Ist-Verstellweg des Verstellelements zumindest im Wesentlichen einem Soll-Verstellweg des Verstellelements entspricht. Hierzu kann z. B. mittels einer oder mehrerer Messeinrichtungen oder auf andere geeignete Weise z. B. die Position und/oder der Verstellweg des Verstellelements gemessen werden und das Verstellelement zumindest so lange verstimmt werden, bis die Ist-Größe zumindest im Wesentlichen der Soll-Größe entspricht. Hierbei liegt der Unterschied zur vorherigen Ausführungsform insbesondere darin, dass nicht direkt z. B. Raddrehzahlen als Regelkriterium herangezogen werden, sondern nur z. B. die Ventilposition überwacht werden kann. Das Soll-Drehzahlverhältnis kann sich dann insbesondere als Ergebnis der Ventilposition ergeben. Diese Art der Regelung kann weniger präzise sein als ein direkter Drehzahlabgleich. Allerdings kann diese eventuelle Unschärfe von Vorteil sein, da das System dann zweckmäßig weniger sensibel auf äußere Einflussgrößen reagiert (z. B. sind Lenkbewegungen relativ träge).

Das Verstellelement des Mengenstromteilers ermöglicht vorzugsweise eine variable Aufsplittung des Hydraulikflüssigkeit-Volumenstroms. Nach Stand der Technik ist das Verhältnis fix 50:50. Der Verstellweg des Verstellelements beschreibt vorzugsweise die Auslenkung des Verstellelements aus der Neutralstellung (entspricht zweckmäßig 50:50) zur gewünschten SOLL-Position (entspricht z. B. 40:60).

Es ist alternativ oder ergänzend erfindungsgemäß vorgesehen, dass der Mengenstromteiler Hydraulikflüssigkeit-Volumenströme zu und/oder von den hydraulischen Motoren der zwei Räder zumindest im Wesentlichen gemäß der Steuergröße und somit vorzugsweise im Verhältnis von Soll-Drehzahlen für die zumindest zwei Räder aufteilt.

Es ist möglich, dass eine Ansteuerung des Verstellelements über zumindest einen z. B. elektrisch ansteuerbaren Proportionalmagneten mit vorzugsweise hydraulischer Verstärkung und/oder Rückstellung durch z. B. Federkraft erfolgt oder eine Ansteuerung des Verstellelements über zumindest ein Steuerventil, vorzugsweise Proportionalventil, zur Steuerung der auf das Verstellelement wirkenden Hydraulikdruckbeaufschlagung und/oder z. B. Rückstellung durch vorzugsweise Federkraft erfolgt.

Es ist im Rahmen der Erfindung möglich, dass ein Bremssystem mit selektivem Bremseneingriff für die variable Sperrdifferential-Funktion zuständig ist.

Das Bremssystem kann z. B. mittels einer Steuergröße angesteuert werden und zumindest so lange eingeregelt werden, bis ein tatsächliches Ist-Drehzahlverhältnis der zwei Räder zumindest im Wesentlichen gemäß einem Soll-Drehzahlverhältnis der zwei Räder eingestellt ist. Hierzu können z. B. mittels einer oder mehrerer Messeinrichtungen oder auf andere geeignete Weise die tatsächlichen Drehzahlen der zwei Räder gemessen werden und das Bremssystem zumindest so lange beeinflusst werden, bis das tatsächliche Drehzahlverhältnis zumindest im Wesentlichen gemäß dem Soll-Drehzahlverhältnis der zwei Räder eingestellt ist (z. B. "35:65"). Das Bremssystem kann folglich so lange eingeregelt werden, bis ein Ist-Drehzahlverhältnis der zumindest zwei Räder zumindest im Wesentlichen einem Soll-Drehzahlverhältnis der zumindest zwei Räder entspricht.

Es ist möglich, dass das Antriebssystem einen zweckmäßig geschlossenen Regelkreis aufweist, über den das Verstellelement und/oder das Bremssystem zumindest so lange einregelbar ist, bis es gemäß einer Steuergröße eingestellt ist. Alternativ oder ergänzend kann das Antriebssystem einen zweckmäßig geschlossenen Regelkreis aufweisen, über den die variable Sperrdifferential-Funktion zumindest so lange einregelbar ist, bis sie gemäß einer Steuergröße eingestellt ist.

Als Steuergröße, z. B. als Steuergröße für die variable Sperrdifferential-Funktion, kann insbesondere ein Verhältnis von Soll-Drehzahlen für die zumindest zwei Räder für eine Kurvenfahrt dienen. Generell geht man bei einer Quersperre davon aus, dass die Quersperre das Drehzahlverhältnis auf 50:50 festlegt (beide Räder drehen gleich schnell). Bei Kurvenfahrt soll von diesem Verhältnis abgewichen werden. Folglich stellt das (variable) Verhältnis der Soll-Drehzahlen vorzugsweise eine Steuergröße dar.

Die Steuergröße stellt im Rahmen der Erfindung folglich vorzugsweise eine Soll-Steuergröße dar.

Es ist möglich, dass die Soll-Steuergröße, vorzugsweise für die variable Sperrdifferential-Funktion, insbesondere nicht konstant ist, sondern sich dynamisch ändert, z. B. Lenkwinkel-abhängig ändert. Es handelt sich hierbei um ein vorzugsweise dynamisches System, so dass die Steuergröße nicht konstant ist, sondern sich z. B. als Funktion des Linkwinkels dynamisch ändern kann.

Das Antriebssystem kann eine Pumpe mit z. B. konstantem Schluckvolumen oder variablem Schluckvolumen aufweisen. Die Pumpe steht zweckmäßig mit dem zumindest einen hydraulischen Motor in Wirkverbindung.

Die Pumpe kann z. B. über eine Kupplung mit einer Welle, insbesondere einer Abtriebswelle, eines Getriebes, z. B. eines Schaltgetriebes, des Kraftfahrzeugs verbunden sein. Alternativ kann die Pumpe an einem Getriebe, z. B. Schaltgetriebe, und/oder Verbrennungsmotor des Kraftfahrzeugs angeordnet sein, insbesondere daran anmontiert, z. B. angeflanscht sein.

Die Steuergröße kann zweckmäßig mehrere Steuergrößen umfassen und/oder einer Soll-Steuergröße entsprechen.

Mit "Einregeln und/oder Regelung" ist im Rahmen der Erfindung vorzugsweise ein Vorgang gemeint, bei dem eine zu regelnde Größe z. B. fortlaufend erfasst wird, mit einer anderen Größe, zweckmäßig der Steuer- und/oder Sollgröße, verglichen wird und abhängig vom Ergebnis dieses Vergleichs im Sinne einer Angleichung an die Steuer- und/oder Sollgröße zweckmäßig beeinflusst wird. Der Wirkungsablauf findet dabei vorzugsweise in einem geschlossenen Regelkreis statt. Das "Einregeln und/oder Regeln" hat insbesondere die Aufgabe, trotz störender Einflüsse den Wert der zu regelnden Größe an den durch die Steuer- und/oder Sollgröße vorgegebenen Wert zumindest im Wesentlichen anzugleichen.

Die zwei hydraulischen Motoren sind vorzugsweise als Radmotoren und/oder als Einzelradmotoren ausgeführt.

Es ist möglich, dass die Sperrdifferential-Funktion eine Querdifferential-Funktion umfasst. Es ist aber auch möglich, dass die Sperrdifferential-Funktion eine Längsdifferential-Funktion umfasst, z. B. mit einem Verteilergetriebe zwischen Hinter- und Vorderachse. Außerdem kann die Sperrdifferential-Funktion eine Zentral- und/oder Längsdifferential-Funktion umfassen.

Es ist möglich, dass die variable Sperrdifferential-Funktion für eine Vorwärts- und/oder eine Rückwärtsfahrt gegeben ist.

Die Erfindung ist nicht auf ein Antriebssystem beschränkt, sondern umfasst auch ein Betriebsverfahren für ein Antriebssystem für ein Kraftfahrzeug, vorzugsweise für ein Antriebssystem wie hierin offenbart.

Das Antriebssystem und/oder das Betriebsverfahren dient somit insbesondere zur Reduzierung der Untersteuerungsneigung eines Kraftfahrzeugs, insbesondere durch Ermöglichung asynchroner Drehzahlen (z. B. Abrolldrehzahlen) für zumindest zwei über eine Sperrdifferential-Funktion miteinander in Verbindung stehender Räder des Kraftfahrzeugs, insbesondere während einer Kurvenfahrt des Kraftfahrzeugs.

Das Antriebssystem umfasst mindestens eine erste Achse, die z. B. über einen Antriebsstrang insbesondere mechanisch antreibbar ist, mindestens eine zweite Achse, der mindestens ein vorzugsweise hydraulischer Motor zum Antreiben von zumindest zwei Rädern des Kraftfahrzeugs zugeordnet ist, und eine Sperrdifferential-Funktion vorzugsweise zum vollständigen oder zumindest teilweisen Traktionsausgleich für die zumindest zwei Räder.

Das Betriebsverfahren zeichnet sich insbesondere dadurch aus, dass die Sperrdifferential-Funktion variabel arbeitet und während einer Kurvenfahrt des Kraftfahrzeugs unterschiedlich schnelle Drehzahlen (z. B. Abrolldrehzahlen) für die zumindest zwei Räder ermöglicht.

Die hierin zum Antriebssystem gemachte Offenbarung gilt sinngemäß auch für das Betriebsverfahren, so dass z. B. funktional und/oder strukturell beschriebene Merkmale ebenfalls als Verfahrensmerkmale im Rahmen der Erfindung beanspruchbar sind.

Die Erfindung umfasst auch ein Kraftfahrzeug, insbesondere ein Nutzfahrzeug (z. B. ein Lastkraftwagen, Omnibus etc.), das ein Antriebssystem wie hierin offenbart aufweist.

Zu erwähnen ist, dass die hierin gewählte Symbolik für das Steuerventil vorzugsweise besagt, dass zunächst über eine gewählte Stromstärke I ein Magnetfeld erzeugt werden kann, um zweckmäßig eine Kraft auf einen Stellkolben auszuüben. Diese Kraft kann z. B. im Gleichgewicht mit von außen wirkenden (z. B. Feder-) Rückstellkräften stehen. Ohne Strom, d. h. Magnetfeld, sorgen z. B. zwei gegenüberliegende Federn oder ein anderer geeigneter Mechanismus dafür, dass das Verstellelement (z. B. Verstellkolben) in der Mittel- oder Neutralstellung ausharrt. Die hydraulische Verbindung zum Verstellelement (z. B. Verstellkolben) stellt vorzugsweise eine Kraftverstärkung dar. In der Regel sind die Stellkräfte so groß, dass diese nicht mehr durch baulich vertretbare Elektromagnete dargestellt werden können. Dies trifft insbesondere bei Systemen mit z. B. erhöhtem Druck zu.

Die zuvor beschriebenen bevorzugten Merkmale und Ausführungsformen der Erfindung sind miteinander kombinierbar. Andere vorteilhafte Weiterbildungen der Erfindung sind in den Unteransprüchen offenbart oder ergeben sich aus der nachstehenden Beschreibung bevorzugter Ausführungsformen der Erfindung in Verbindung mit den beigefügten Figuren.
- Figur 1: zeigt eine schematische Darstellung eines Antriebssystems für ein Kraftfahrzeug gemäß einer Ausführungsform der Erfindung,
- Figur 2: zeigt eine schematische Darstellung eines Antriebssystems für ein Kraftfahrzeug gemäß einer anderen Ausführungsform der Erfindung,
- Figur 3: zeigt eine schematische Darstellung eines Antriebssystems für ein Kraftfahrzeug gemäß einer wiederum anderen Ausführungsform der Erfindung,
- Figur 4: zeigt eine schematische Darstellung eines Antriebssystems für ein Kraftfahrzeug gemäß einer noch anderen Ausführungsform der Erfindung,
- Figur 5: zeigt einen hydraulischen Mengenstromteiler gemäß einer Ausführungsform der Erfindung,
- Figur 6: zeigt einen hydraulischen Mengenstromteiler gemäß einer anderen Ausführungsform der Erfindung und
- Figur 7: zeigt einen hydraulischen Mengenstromteiler gemäß Stand der Technik.

Die in den Figuren gezeigten Ausführungsformen stimmen teilweise überein, wobei ähnliche oder identische Teile mit den gleichen Bezugszeichen versehen sind, und zu deren Erläuterung auch auf die Beschreibung einer oder mehrerer anderer Ausführungsformen verwiesen wird, um Wiederholungen zu vermeiden.

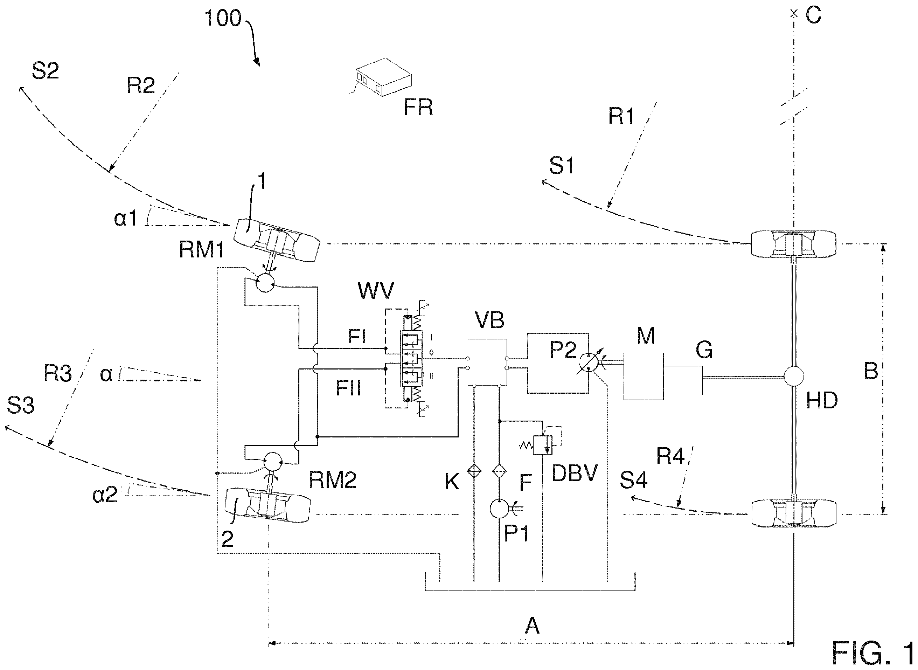

Figur 1 zeigt eine schematische Darstellung eines Antriebssystems 100 für ein Kraftfahrzeug gemäß einer Ausführungsform der Erfindung. Das Antriebssystem 100 dient insbesondere zur Reduzierung der Untersteuerungsneigung des Kraftfahrzeugs, insbesondere durch Ermöglichung während einer Kurvenfahrt des Kraftfahrzeugs asynchroner Drehzahlen (z. B. Abrolldrehzahlen) für zumindest zwei über eine Sperrdifferential-Funktion miteinander in Verbindung stehende Räder 1 und 2 einer insbesondere hydrostatisch angetriebenen Achse des Kraftfahrzeugs.

Das Antriebssystem 100 umfasst eine erste Achse, die vorzugsweise eine hintere Achse ist und z. B. über einen Antriebsmotor M, zweckmäßig einen Verbrennungsmotor, und einen Antriebsstrang mechanisch antreibbar ist.

Das Antriebssystem 100 umfasst außerdem eine zweite Achse, die vorzugsweise eine vordere Achse ist und der zwei hydraulische Motoren (Rad-/Einzelradmotoren) RM1 und RM2 zum Antreiben der zwei vorzugsweise lenkbaren Räder 1 und 2 des Kraftfahrzeugs zugeordnet ist. Der Radmotor RM1 ist dem Rad 1 zugeordnet, während der Radmotor RM2 dem Rad 2 zugeordnet ist.

Die erste Achse ist somit eine mechanisch angetriebene Achse, während die zweite Achse eine hydrostatisch angetriebene Achse ist.

Das Antriebssystem 100 weist außerdem einen vorzugsweise als Steuerblock VB ausgeführten Ventilblock zur Steuerung der Radmotoren RM1 und RM2, eine zweckmäßig konstante oder variable Speisepumpe P1 (in Figur 1 ist eine konstante Speisepumpe dargestellt), eine zweckmäßig konstante oder variable Hochdruckpumpe P2, ein Getriebe G, ein Hinterachsdifferential HD für die erste Achse, einen Kühler K, einen Filter F, ein Druckbegrenzungsventil DBV und eine Steuereinrichtung FR (insbesondere einen Fahrzeugrechner) auf.

Bezugszeichen a1 kennzeichnet einen Lenkwinkel des Rads 1, Bezugszeichen R2 kennzeichnet den individuellen Kurvenradius des Rads 1 und Bezugszeichen S2 kennzeichnet die individuelle Kurvenspur des Rades 1.

Bezugszeichen a2 kennzeichnet einen Lenkwinkel des Rades 2, Bezugszeichen R3 kennzeichnet einen individuellen Kurvenradius des Rades 2 und Bezugszeichen S3 kennzeichnet die individuelle Kurvenspur des Rades R2.

Bezugszeichen R1 kennzeichnet den Kurvenradius eines Hinterrads, während Bezugszeichen S1 eine individuelle Kurvenspur dieses Hinterrads kennzeichnet.

Bezugszeichen R4 kennzeichnet einen individuellen Kurvenradius eines Hinterrads, während Bezugszeichen S4 eine zugehörige individuelle Kurvenspur dieses Hinterrads kennzeichnet.

Bezugszeichen α kennzeichnet einen Gesamt-Lenkwinkel des Kraftfahrzeugs, der z. B. aus einem Mittelwert der Lenkwinkel a1 und a2 gebildet werden kann.

Der oder die Lenkwinkel können im Rahmen der Erfindung z. B. über einen Lenkwinkelsensor in der Lenkstange erfasst werden. Der oder die Lenkwinkel der einzelnen Räder ergeben sich aus kinematischen Zwangsbedingungen, welche geometrisch bedingt sind.

Bezugszeichen B kennzeichnet die Spurweite und/oder Spur der zwei Räder 1 und 2 und der zwei Hinterräder, die in der in Figur 1 gezeigten Ausführungsform gleich groß sind, im Rahmen der Erfindung aber nicht gleich groß sein müssen.

Die Drehzahl, insbesondere Abrolldrehzahl, für die einzelnen Räder ergibt sich aus dem individuellen Weg bzw. der individuellen Kurvenspur S1, S2, S3 bzw. S4, denen jedes Rad bei Kurvenfahrt folgt, insbesondere unter der Annahme, dass alle vier Räder den gleichen Radius aufweisen. Unterscheiden sich die Radgrößen der einzelnen Räder z. B., kann diese Varianz zusätzlich in die tatsächliche Abrolldrehzahl einfließen.

Bezugszeichen A kennzeichnet den Radstand und somit den Abstand zwischen der ersten Achse und der zweiten Achse. Bei einem mechanisch angetriebenen Doppelachsaggregat z. B. stellt die geometrische Mitte des Doppelachsaggregats und/oder Tandems in Längsrichtung die Referenz für eine Distanzmessung dar.

Bezugszeichen C kennzeichnet einen Kurvenmittelpunkt der durch das Kraftfahrzeug abzufahrenden Kurve.

Das Antriebssystem 100 umfasst eine Sperrdifferential-Funktion zum zweckmäßig vollständigen oder zumindest teilweisen Traktionsausgleich für die zumindest zwei Räder 1 und 2.

Die Sperrdifferential-Funktion ist aber zusätzlich insbesondere Lenkwinkel-abhängig variabel ausgestaltet, so dass während einer Kurvenfahrt des Kraftfahrzeugs unterschiedliche Drehzahlen für die zwei Räder 1 und 2 ermöglicht sind. Bei dem Lenkwinkel kann es sich insbesondere um den Lenkwinkel a1 und/oder a2 handeln. Aus geometrischen Randbedingungen kann z. B. aus der Kenntnis des Lenkwinkels a1 auf den Lenkwinkel a2 geschlossen werden oder umgekehrt. Bei dem Lenkwinkel kann es sich z. B. auch um den Gesamt-Lenkwinkel α handeln, der z. B. aus einem Mittelwert der Lenkwinkel a1 und a2 gebildet werden kann.

Bei der in Figur 1 gezeigten Ausführungsform ist für die variable Sperrdifferential-Funktion ein hydraulischer, ein Verstellelement (z. B. Verstellkolben) aufweisender Mengenstromteiler WV (z. B. ein Proportionalventil) zuständig. Der Mengenstromteiler WV dient dazu, dem Radmotor RM1 einen Hydraulikflüssigkeit-Volumenstrom FI zukommen zu lassen und dem Radmotor RM2 einen Hydraulikflüssigkeit-Volumenstrom FII zukommen zu lassen.

Die variable Sperrdifferential-Funktion ermöglicht, dass ein während einer Kurvenfahrt zu schnell drehendes Rad der zwei Räder 1 und 2 verlangsamt wird. Das ist insbesondere durch Reduzierung des Hydraulikflüssigkeit-Volumenstroms FI/FII zu dem hydraulischen Motor RM1/RM2 des zu schnell drehenden Rades 1/2 realisierbar.

Die Steuereinrichtung FR dient zum Steuern des Mengenstromteilers WV und zum Berechnen einer Soll-Drehzahl (insbesondere einer Soll-Abrolldrehzahl) für jedes der zwei Räder 1 und 2 für eine Kurvenfahrt, und zwar unter Berücksichtigung eines Lenkwinkels des Kraftfahrzeugs.

Als Steuergröße zum Steuern des Mengenstromteilers WV und somit zum Steuern der variablen Sperrdifferential-Funktion dient insbesondere ein Verhältnis der Soll-Drehzahlen für die zwei Räder 1 und 2, z. B. 40:60, 55:45, 70:30 etc., das vorzugsweise ebenfalls durch die Steuereinrichtung FR ermittelbar ist.

Das Verstellelement des Mengenstromteilers WV kann mittels der Steuergröße mittelbar oder unmittelbar angesteuert werden und solange eingeregelt werden, bis es im Wesentlichen gemäß der Steuergröße eingestellt ist. Hierzu kann das Antriebssystem 100 z. B. eine Messeinrichtung aufweisen, um den Verstellweg und/oder die Position des Verstellelements messen zu können.

Die Soll-Drehzahlen der Räder 1 und 2 können als bekannt vorausgesetzt werden, z. B. aufgrund theoretischer Überlegungen oder Vorberechnungen. Über die Charakteristik des Mengenstromteilers WV (z. B. hydraulische Kennlinien) ist der Zusammenhang zwischen Verstellelement-Stellweg und Volumenstromteilverhältnis (= Drehzahlverhältnis) gegeben. Somit kann jedem Lenkwinkel "alpha" ein Stellweg "x" zugeordnet werden. Stellweg "x" entspricht wiederum einem bekannten Drehzahlverhältnis.

Bei der in Figur 1 gezeigten Ausführungsform dienen insbesondere die geometrischen Gegebenheiten des Antriebssystems 100 bzw. des Kraftfahrzeugs als Basis für die variable Sperrdifferential-Funktion, d.h. insbesondere der Radstand A und die Spurweite B. Somit kann bei einem vorgegebenen Lenkwinkel α, α1 bzw. α2 für jedes Rad 1 und 2 rein theoretisch ein Verhältnis der Soll-Drehzahlen der Räder 1 und 2 (insbesondere eine individuelle Spur) zueinander berechnet werden. Dadurch ergibt sich eine eindeutige Zuordnung von Lenkwinkel α, α1 bzw. α2 und theoretischem Hydraulikflüssigkeit-Volumenstrom FI bzw. FII zu und/oder von den einzelnen Radmotoren RM1 und RM2.

Der Hydraulikflüssigkeit-Volumenstrom FI bzw. FII zu und/oder von den einzelnen Radmotoren RM1 und RM2 wird direkt von der Stellung des Verstellelements des Mengenstromteilers WV beeinflusst. Eine Druckwaage des Mengenstromteilers WV kann folglich so lange verstimmt werden, bis der tatsächliche Verstellweg bzw. die tatsächliche Position des Verstellelements mit dem gewünschten Verstellweg bzw. der gewünschten Position übereinstimmt. In diesem Fall dient der Verstellweg bzw. die Position des Verstellelements als Regelgröße, gegebenenfalls zuzüglich zu den Hydraulikdrücken der Hydraulikflüssigkeit-Volumenströme FI und FII.

Es ist im Rahmen der Erfindung allerdings ebenfalls möglich, dass das Verstellelement mittels der Steuergröße aus der Steuereinrichtung FR angesteuert wird und solange eingeregelt wird, bis das tatsächliche Verhältnis der Ist-Drehzahlen der zwei Räder 1 und 2 gemäß der Steuergröße eingestellt ist. Hierzu kann das Antriebssystem 100 z. B. Messeinrichtungen aufweisen, um die tatsächlichen Drehzahlen der zwei Räder R1 und R2 zu messen. Somit können z. B. über Sensoren die individuellen Raddrehzahlen der Räder 1 und 2 erfasst werden. Über den Lenkwinkel α, α1 bzw. α2 kann für jedes der zwei Räder 1 und 2 ein Kurvenradius R2 und R3 berechnet werden. Kommt es zu einer Diskrepanz zwischen tatsächlicher und theoretischer Soll-Raddrehzahl kann durch Verstellen des Verstellelements und insbesondere Verstimmung der Druckwaage im Mengenstromteiler WV eine Angleichung herbeigeführt werden. In diesem Fall können die beiden zweckmäßig mittels Messeinrichtungen erfassten Ist-Drehzahlen der Räder 1 und 2 als Regelgröße dienen, gegebenenfalls zuzüglich zu den Hydraulikdrücken der Hydraulikflüssigkeit-Volumenströme FI und FII.

Im Rahmen der Erfindung ist auch eine Kombination beider Ausführungsformen möglich, so dass neben geometrischen Gegebenheiten, gegebenenfalls den Drücken in den Hydraulikflüssigkeit-Volumenströmen FI und FII, auch die Drehzahlen der zwei Räder 1 und 2 sowie ein Verstellweg und/oder eine Position des Verstellelements im Mengenstromteiler WV gemessen werden und mit theoretischen Werten und somit insbesondere Soll-Werten abgeglichen werden können.

Bei dem in Figur 1 gezeigten Antriebssystem 100 ist die variable Hochdruckpumpe P2 an den Verbrennungsmotor M angeflanscht.

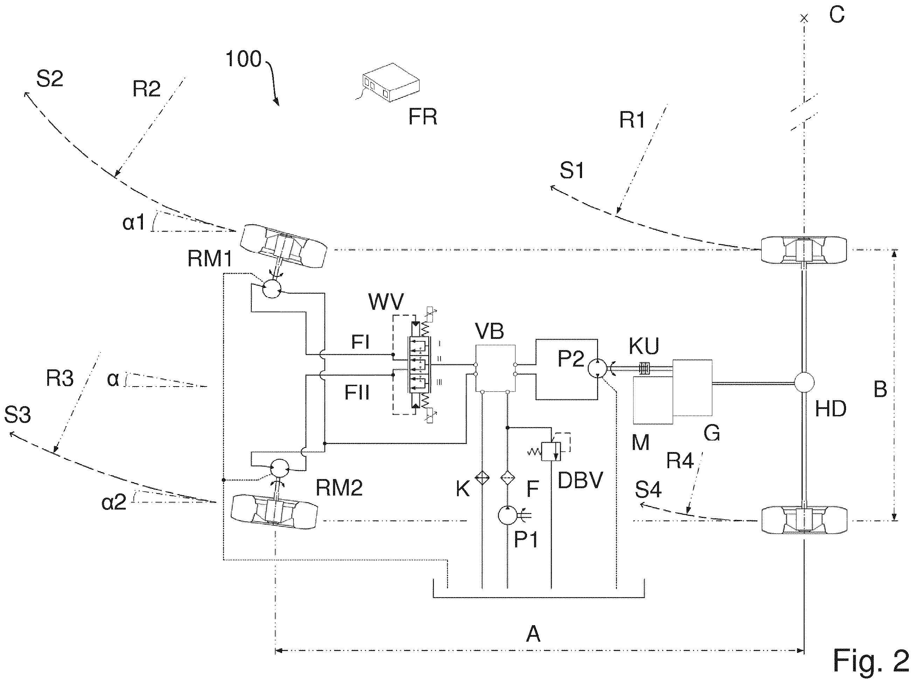

Figur 2 zeigt eine schematische Darstellung eines Antriebssystems 100 gemäß einer anderen Ausführungsform der Erfindung.

Das in Figur 2 gezeigte Antriebssystem 100 stimmt im Wesentlichen mit dem in Figur 1 gezeigten Antriebssystem 100 überein. Es unterscheidet sich allerdings von dem in Figur 1 gezeigten Antriebssystem 100 durch die Verwendung einer Hochdruckpumpe P2 mit konstantem Schluckvolumen, wobei die Hochdruckpumpe P2 über eine Kupplung KU mit einer Abtriebswelle des Schaltgetriebes G verbunden ist.

Der in den Figuren 1 und 2 gezeigte Mengenstromteiler WV ist ohne Freilauffunktion ausgeführt, kann aber auch mit Freilauffunktion ausgeführt werden. Denkbar ist auch eine Ausbildung mit der Möglichkeit, eine Zwangssynchronisierung der Hydraulikflüssigkeit-Volumenströme FI und FII zu umgehen.

Zu erwähnen ist, dass das in den Figuren 1 und 2 gezeigte Antriebssystem 100 im Wesentlichen ausgeführt sein kann wie das in EP 1 886 861 A2 beschriebene Antriebssystem, modifiziert mit einem oder mehreren hierin beschriebenen erfindungsgemäßen Merkmalen.

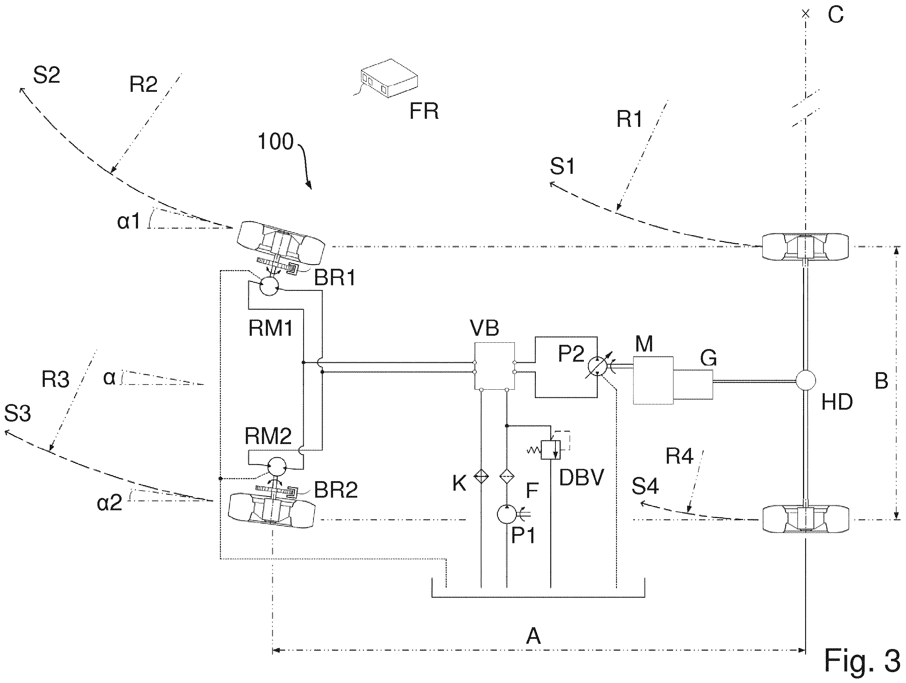

Figur 3 zeigt ein Antriebssystem 100 gemäß einer anderen Ausführungsform der Erfindung.

Das in Figur 3 gezeigte Antriebssystem 100 entspricht im Wesentlichen dem Antriebssystem 100 der Figur 1, allerdings mit dem Unterschied, dass nicht ein Mengenstromteiler für die Sperrdifferential-Funktion zuständig ist, sondern ein Bremssystem BR1 und BR2 mit selektivem Bremseingriff.

Das Bremssystem umfasst dabei eine Bremse BR1 für das Rad 1 und eine Bremse BR2 für das Rad 2.

Das Antriebssystem 100 umfasst ebenfalls eine Steuereinrichtung FR zum Steuern des Bremssystems und zum Berechnen einer Soll-Drehzahl für jedes der zwei Räder 1 und 2 für eine Kurvenfahrt, und zwar insbesondere unter Berücksichtigung eines Lenkwinkels α, α1 bzw. α2.

Als Steuergröße zum Steuern der variablen Sperrdifferential-Funktion kann erneut ein Verhältnis der Soll-Drehzahlen für die zwei Räder 1 und 2 dienen.

Durch den Winkel "alpha" kann über die kinematischen Zwangsbedingungen ein Soll-Raddrehzahlverhältnis von Rad 1 zu Rad 2 vorgegeben werden. Somit kann das Verhältnis der SOLL-Drehzahlen als Steuergröße dienen, der das System folgen muss.

Das Bremssystem und somit insbesondere die Bremsen BR1 und BR2 können mittels der Steuergröße angesteuert und solange eingeregelt werden, bis das tatsächliche Ist-Drehzahlverhältnis der zwei Räder 1 und 2 im Wesentlichen gemäß der Steuergröße und somit gemäß einem Soll-Drehzahlverhältnis eingestellt ist.

Dabei kann das tatsächliche Drehzahlverhältnis der zwei Räder 1 und 2 ermittelt werden, indem die Drehzahlen der Räder 1 und 2 z. B. über geeignete Erfassungseinrichtungen, wie z. B. Sensoren, erfasst werden.

Bei einer variablen Sperrdifferential-Funktion durch selektiven Bremseneingriff dienen in erster Linie ein Lenkwinkel α, α1 bzw. α2 und Raddrehzahlen für die Räder 1 und 2 als Regelgröße.

Der zumindest eine Lenkwinkel wird insbesondere von außen vorgegeben (genauso wie z. B. individuelle Radgrößen). Aus den kinematischen Zwangsbedingungen können die Führungsgrößen errechnet werden. Die Führungsgrößen sind z. B. die individuellen Soll-Raddrehzahlen. Die Regelgröße, die individuellen Ist-Raddrehzahlen, werden zweckmäßig mit der Soll-Vorgabe verglichen. Die Abweichung wird über den Regler (idealerweise) kompensiert, bis IST = SOLL.

Handelt es sich bei den Rädern 1 und 2 z. B.um nicht lenkbare Räder, so werden insbesondere Radstand A, Spurweite B und/oder individuelle Reifengrößen als weitere, die Steuergröße beeinflussende Größen benötigt, um für die einzelnen Räder der Achse eine individuelle Drehzahl (z. B. Abrollweg) zu berechnen.

Bei der Variante, in der das Bremssystem mit selektivem Bremseneingriff für die variable Sperrdifferential-Funktion zuständig ist, wird zweckmäßig ein zu schnell drehendes Rad durch Abbremsen verlangsamt, wohingegen bei der Variante, in der für die variable Sperrdifferential-Funktion ein hydraulischer Mengenstromteiler zuständig ist, der Hydraulikflüssigkeit-Volumenstrom zu dem Radmotor des zu schnell drehenden Rades reduziert wird.

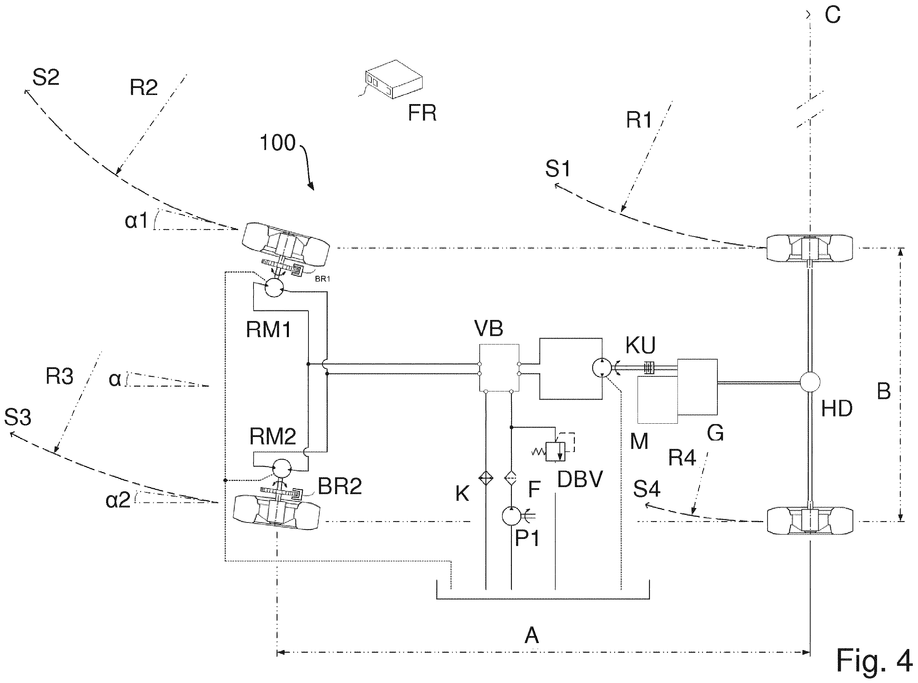

Figur 4 zeigt ein Antriebssystem 100 gemäß einer Ausführungsform der Erfindung, das im Wesentlichen dem Antriebssystem 100 der Figur 2 entspricht, allerdings mit dem Unterschied, dass die Sperrdifferential-Funktion durch ein Bremssystem BR1 und BR2 mit selektivem Bremseneingriff realisiert wird.

Zu erwähnen ist, dass die variable Sperrdifferential-Funktion im Rahmen der Erfindung zweckmäßig sowohl für eine Vorwärts- als auch für eine Rückwärtsfahrt gegeben sein kann.

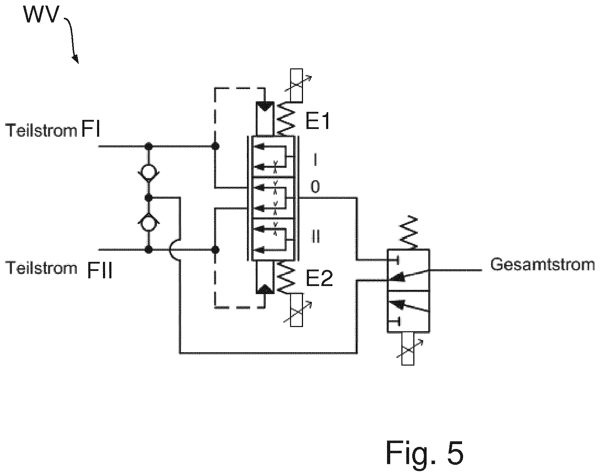

Figur 5 zeigt einen Mengenstromteiler WV, vorzugsweise mit Freilauffunktion, gemäß einer Ausführungsform der Erfindung. Die Darstellung ist stark vereinfacht. Die Strömungsrichtung ist von Gesamtstrom zu Teilstrom FI und FII.

Der Mengenstromteiler WV ist in Form eines Proportionalventils ausgeführt, mit insbesondere elektroproportionaler Verstärkung einer Rückstellkraft an der Druckwaage, insbesondere des Verstellelements. Dadurch kann zweckmäßig eine elektroproportionale Verstärkung einer Federkraft zweier Federelemente E1 und E2, welche jeweils auf das Verstellelement (insbesondere Ventilkolben) des Mengenstromteilers WV wirkt, erzielt werden. Unbestromt handelt es sich jeweils um eine statische Feder, die mit der gleichen Kraft auf das Verstellelement wirkt. Die Freilauffunktion wird in dieser Ausführungsform vorzugsweise durch ein 3/2 Wegeventil und z. B. zwei nachgeschalteter Rückschlagventile realisiert.

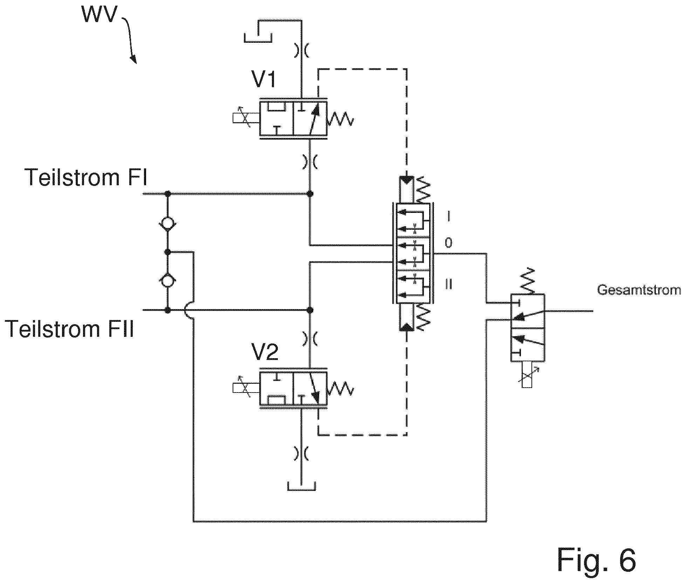

Figur 6 zeigt einen Mengenstromteiler WV, vorzugsweise mit Freilauffunktion, gemäß einer anderen Ausführungsform der Erfindung.

Der Mengenstromteiler WV ist in Form eines Proportionalventils ausgeführt, mit insbesondere elektroproportionaler Hydraulik-Druckbeaufschlagung des Verstellelements. Hierbei kommen insbesondere zusätzliche Proportionalventile V1 und V2 zum Einsatz, die nicht auf Federn des Verstellelements wirken, sondern auf Drücke in den Hydraulikflüssigkeit-Volumenströmen FI und FII, welche wiederum auf das Verstellelement einwirken.

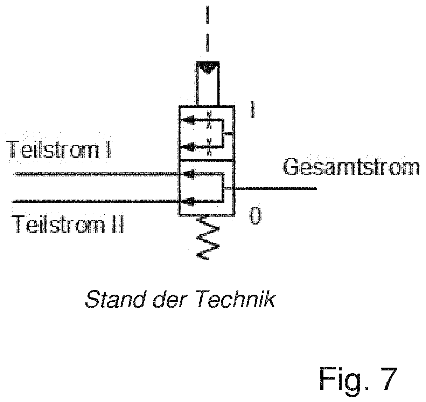

Figur 7 zeigt einen Mengenstromteiler gemäß Stand der Technik, mittels dem eine Sperrdifferential-Funktion zum Traktionsausgleich mit Zwangssynchronisierung zweier Räder während einer Kurvenfahrt realisierbar ist.

Drosseln im Mengenstromteiler besitzen jeweils den gleichen Querschnitt und die von außen auf den Stellkolben wirkenden Federkräfte sind gleich groß. Unter diesen Voraussetzungen ist der Mengenstromteiler bemüht, dass der Druck in Teilstrom I (Hydraulikflüssigkeit-Volumenstrom) gleich dem Druck in Teilstrom II (Hydraulikflüssigkeit-Volumenstrom) ist. Demnach dient als Regelgröße für den Mengenstromteiler der Druck in den beiden Teilströmen. Es wird weiter angenommen, dass Teilstrom I einen Radmotor für ein rechtes Rad und Teilstrom II einen Radmotor für ein linkes Rad versorgt. Reduziert sich nun z. B. der Widerstand in Teilstrom I (Rad verliert Haftung), so ändert sich zunächst die Aufteilung des Hydraulikfluidstroms (Ölstroms) zugunsten von Teilstrom I (Weg des geringsten Widerstandes). Teilstrom II bekommt entsprechend weniger Hydraulikflüssigkeit. Da die Drosseln im Mengenstromteiler gleich groß sind, wird in Folge der Druck von Teilstrom I und II auseinanderdriften. Aufgrund des größeren Volumenstroms von Teilstrom I ist der Druck hier auch geringer. Dieses Druckdelta wirkt nun auf die Druckwaage (oben der kleinere Druck, unten der größere Druck) und verschiebt den Stellkolben nach oben (infinitesimal kleiner Weg möglich). Je mehr der Verstellkolben in Position II kommt, umso geringer wird der Drosseleffekt von Gesamtstrom zu Teilstrom II; der von außen wirkende Druck verstimmt somit die Druckwaage. Anders formuliert, durch die Verstellung des Verstellkolbens nach oben in Position I wird in Teilstrom I ein künstlicher Widerstand eingebracht bzw. in Teilstrom II wird dieser reduziert. Wenn der künstliche Widerstand in Teilstrom I (Drossel) und der reale Widerstand in Teilstrom II (ohne Drossel, bedingt durch Widerstandsmoment des Rades) gleich sind, herrscht in beiden Ästen der gleiche Druck und beide Räder drehen wieder gleich schnell.

### Bezugszeichenliste

- FR: Steuereinrichtung, z. B. Fahrzeugrechner
- C: Kurvenmittelpunkt
- R1: Individueller Kurvenradius für Hinterrad
- R2: Individueller Kurvenradius für Rad 1
- R3: Individueller Kurvenradius für Rad 2
- R4: Individueller Kurvenradius für Hinterrad
- S1: Individuelle Kurvenspur für Hinterrad
- S2: Individuelle Kurvenspur für Rad 1
- S3: Individuelle Kurvenspur für Rad 2
- S4: Individuelle Kurvenspur für Hinterrad
- A: Radstand
- B: Spurweite
- a1: Lenkwinkel für Rad 1
- α2: Lenkwinkel für Rad 2
- α: Gesamtlenkwinkel
- RM1: Hydrostatischer Radmotor für Rad 1
- RM2: Hydrostatischer Radmotor für Rad 2
- VW: Mengenstromteiler, insbesondere Wegeventil, vorzugsweise Proportionalventil

- BR1: Bremse für Rad 1
- BR2: Bremse für Rad 2
- VB: Ventilblock zur Steuerung des hydrostatischen Antriebs, insbesondere der hydrostatischen Radmotoren
- K: Kühler
- F: Filter
- P1: Speisepumpe, zweckmäßig konstant oder variabel
- P2: Hochdruckpumpe, zweckmäßig konstant oder variabel
- DBV: Druckbegrenzungsventil
- KU: Kupplung
- M: Motor, insbesondere Verbrennungsmotor
- G: Getriebe
- HD: Hinterachsdifferential einer mechanisch angetriebenen Achse
- FI: Hydraulikflüssigkeit-Volumenstrom
- FII: Hydraulikflüssigkeit-Volumenstrom
- E1: Federelement
- E2: Federelement
- V1: Ventil
- V2: Ventil

## Patentansprüche

1. Antriebssystem (100) für ein Kraftfahrzeug, vorzugsweise zur Reduzierung der Untersteuerungsneigung eines Kraftfahrzeugs und/oder zur Ermöglichung asynchroner Drehzahlen für zumindest zwei über eine Sperrdifferential-Funktion miteinander in Verbindung stehende Räder (1, 2) des Kraftfahrzeugs, mit:
- mindestens einer ersten Achse, die vorzugsweise über einen Antriebsstrang antreibbar ist,
- mindestens einer zweiten Achse, der mindestens zwei hydraulische Motoren (RM1, RM2) zum Antreiben von zumindest zwei Rädern (1, 2) des Kraftfahrzeugs zugeordnet ist, und
- einer Sperrdifferential-Funktion zum Traktionsausgleich für die zumindest zwei Räder (1, 2),
wobei
- die Sperrdifferential-Funktion variabel ist, um während einer Kurvenfahrt des Kraftfahrzeugs unterschiedliche Drehzahlen für die zumindest zwei Räder (1, 2) zu ermöglichen, und
- ein hydraulischer Mengenstromteiler (WV) mit einem Verstellelement für die variable Sperrdifferential-Funktion zuständig ist und vorzugsweise das Verstellelement eine variable Aufsplittung eines Hydraulikflüssigkeit-Volumenstroms (FI, FII) zu den hydraulischen Motoren ermöglicht,
**dadurch gekennzeichnet, dass**
(a) das Verstellelement zumindest so lange eingeregelt wird, bis ein Verhältnis von Ist-Drehzahlen für die zumindest zwei Räder (1, 2) einem Verhältnis von Soll-Drehzahlen für die zumindest zwei Räder (1, 2) entspricht, und/oder
(b) das Verstellelement zumindest so lange eingeregelt wird, bis eine Ist-Position des Verstellelements einer Soll-Position des Verstellelements entspricht, und/oder
(c) der Mengenstromteiler (WV) Hydraulikfluid-Volumenströme (FI, FII) zu und/oder von den hydraulischen Motoren (RM1, RM2) der zwei Räder (1, 2) im Verhältnis von Soll-Drehzahlen für die zumindest zwei Räder (1, 2) aufteilt.

2. Antriebssystem (100) nach Anspruch 1, **dadurch gekennzeichnet, dass** die variable Sperrdifferential-Funktion Lenkwinkel-abhängig variabel ist.

3. Antriebssystem (100) nach Anspruch 1 oder 2, **dadurch gekennzeichnet, dass** die variable Sperrdifferential-Funktion ausgeführt ist, um während einer Kurvenfahrt ein zu schnell drehendes Rad der zwei Räder (1, 2) zu verlangsamen, vorzugsweise durch Reduzierung eines Hydraulikflüssigkeit-Volumenstroms (FI, FII) zu dem hydraulischen Motor (RM1, RM2) des zu schnell drehenden Rades (1, 2) oder durch Abbremsen mittels eines Bremseneingriffs des zu schnell drehenden Rades (1, 2).

4. Antriebssystem (100) nach einem der vorhergehenden Ansprüche, **dadurch gekennzeichnet, dass** das Antriebssystem (100) eine vorzugsweise elektronische Steuereinrichtung (FR) aufweist, zum Steuern der variablen Sperrdifferential-Funktion und/oder zum Berechnen einer Soll-Drehzahl für jedes der zwei Räder (1, 2) für eine Kurvenfahrt unter Berücksichtigung eines Lenkwinkels des Kraftfahrzeugs.

5. Antriebssystem (100) nach einem der vorhergehenden Ansprüche, **dadurch gekennzeichnet, dass** die variable Sperrdifferential-Funktion über einen geschlossenen Regelkreis regelbar ist.

6. Antriebssystem (100) nach Anspruch 4, **dadurch gekennzeichnet, dass** das Verstellelement durch die Steuereinrichtung (FR) elektroproportional beeinflussbar ist.

7. Antriebssystem (100) nach einem der vorhergehenden Ansprüche, **dadurch gekennzeichnet, dass** der Mengenstromteiler (WV) mit oder ohne Freilauffunktion ausgeführt ist.

8. Antriebssystem (100) nach einem der vorhergehenden Ansprüche, **dadurch gekennzeichnet, dass** eine Ansteuerung des Verstellelements über zumindest einen elektrisch ansteuerbaren Proportionalmagneten mit hydraulischer Verstärkung und Rückstellung durch Federkraft erfolgt oder über zumindest ein Steuerventil (V1, V2), vorzugsweise Proportionalventil, zur Steuerung der auf das Verstellelement wirkenden Hydraulikdruckbeaufschlagung und Rückstellung durch Federkraft erfolgt.

9. Antriebssystem (100) nach einem der vorhergehenden Ansprüche, **dadurch gekennzeichnet, dass** ein Bremssystem (BR1, BR2) mit selektivem Bremseneingriff für die variable Sperrdifferential-Funktion zuständig ist.

10. Antriebssystem (100) nach Anspruch 9, **dadurch gekennzeichnet, dass** das Bremssystem (BR1, BR2) so lange eingeregelt wird, bis ein Verhältnis von Ist-Drehzahlen für die zumindest zwei Räder (1, 2) einem Verhältnis von Soll-Drehzahlen für die zumindest zwei Räder (1, 2) entspricht.

11. Antriebssystem (100) nach Anspruch 9 oder 10, **dadurch gekennzeichnet, dass** das Antriebssystem (100) einen geschlossenen Regelkreis aufweist, über den das Bremssystem (BR1, BR2) zumindest so lange einregelbar ist, bis es gemäß zumindest einer Soll-Steuergröße eingestellt ist.

12. Antriebssystem (100) nach einem der vorhergehenden Ansprüche, **dadurch gekennzeichnet, dass** das Antriebssystem (100) einen geschlossenen Regelkreis aufweist, über den
- die variable Sperrdifferential-Funktion zumindest so lange einregelbar ist, bis sie gemäß zumindest einer Soll-Steuergröße eingestellt ist, und/oder
- das Verstellelement zumindest so lange einregelbar ist, bis es gemäß zumindest einer Soll-Steuergröße eingestellt ist.

13. Antriebssystem (100) nach Anspruch 11 oder 12, **dadurch gekennzeichnet, dass** als Soll-Steuergröße, vorzugsweise für die variable Sperrdifferential-Funktion, ein Verhältnis von Soll-Drehzahlen für die zumindest zwei Räder (1, 2) für eine Kurvenfahrt dient.

14. Antriebssystem (100) nach einem der Ansprüche 11 bis 13, **dadurch gekennzeichnet, dass** die Soll-Steuergröße, vorzugsweise für die variable Sperrdifferential-Funktion, dynamisch ist und sich Lenkwinkel-abhängig ändert.

15. Antriebssystem (100) nach einem der vorhergehenden Ansprüche, **gekennzeichnet durch** zumindest eine mit dem zumindest einen hydraulischen Motor (RM1, RM2) in Wirkverbindung stehende Pumpe (P1, P2) mit konstantem Schluckvolumen oder variablem Schluckvolumen.

16. Antriebssystem (100) nach Anspruch 15, wobei die zumindest eine Pumpe eine Speisepumpe (P1) und/oder eine Hochdruckpumpe (P2) umfasst.

17. Kraftfahrzeug, mit einem Antriebssystem (100) nach einem der vorhergehenden Ansprüche.

18. Betriebsverfahren für ein Antriebssystem (100) für ein Kraftfahrzeug, insbesondere zur Reduzierung der Untersteuerungsneigung eines Kraftfahrzeugs und/oder zur Ermöglichung asynchroner Drehzahlen für zumindest zwei über eine Sperrdifferential-Funktion miteinander in Verbindung stehende Räder (1, 2) des Kraftfahrzeugs, vorzugsweise für ein Antriebssystem (100) nach einem der Ansprüche 1 bis 16, wobei das Antriebssystem (100) aufweist:
- mindestens eine erste Achse, die vorzugsweise über einen Antriebsstrang mechanisch antreibbar ist,
- mindestens eine zweite Achse, der mindestens zwei hydraulische Motoren (RM1, RM2) zum Antreiben von zumindest zwei Rädern (1, 2) des Kraftfahrzeugs zugeordnet ist, und
- eine Sperrdifferential-Funktion zum Traktionsausgleich für die zumindest zwei Räder (1, 2),
wobei
- die Sperrdifferential-Funktion variabel arbeitet und während einer Kurvenfahrt des Kraftfahrzeugs unterschiedliche Drehzahlen für die zumindest zwei Räder (1, 2) ermöglicht, und
- ein hydraulischer Mengenstromteiler (WV) mit einem Verstellelement für die variable Sperrdifferential-Funktion zuständig ist und vorzugsweise das Verstellelement eine variable Aufsplittung eines Hydraulikflüssigkeit-Volumenstroms (FI, FII) zu den hydraulischen Motoren ermöglicht,
**dadurch gekennzeichnet, dass**
(a) das Verstellelement zumindest so lange eingeregelt wird, bis ein Verhältnis von Ist-Drehzahlen für die zumindest zwei Räder (1, 2) einem Verhältnis von Soll-Drehzahlen für die zumindest zwei Räder (1, 2) entspricht, und/oder
(b) das Verstellelement zumindest so lange eingeregelt wird, bis eine Ist-Position des Verstellelements einer Soll-Position des Verstellelements entspricht, und/oder
(c) der Mengenstromteiler (WV) Hydraulikfluid-Volumenströme (FI, FII) zu und/oder von den hydraulischen Motoren (RM1, RM2) der zwei Räder (1, 2) im Verhältnis von Soll-Drehzahlen für die zumindest zwei Räder (1, 2) aufteilt.

## Claims

1. A drive system (100) for a motor vehicle, preferably for reducing the understeer tendency of a motor vehicle and/or for allowing asynchronous rotational speeds for at least two wheels (1, 2) of the motor vehicle which are connected to one another via a locking differential function, having:
- at least one first axle, which is preferably driveable by means of a drivetrain,
- at least one second axle, which is assigned at least two hydraulic motors (RM1, RM2) for driving at least two wheels (1, 2) of the motor vehicle, and
- a locking differential function for traction compensation for the at least two wheels (1, 2),
wherein
- the locking differential function is variable in order to allow different rotational speeds for the at least two wheels (1, 2) during a cornering manoeuvre of the motor vehicle, and
- a hydraulic volumetric flow divider (WV) with an adjustment element is responsible for the variable locking differential function, and preferably, the adjustment element allows variable splitting of a hydraulic fluid volume flow (FI, FII) to the hydraulic motors,
**characterized in that**
(a) the adjustment element is adjusted by closed-loop control at least until such time as a ratio of actual rotational speeds for the at least two wheels (1, 2) corresponds to a ratio of setpoint rotational speeds for the at least two wheels (1, 2), and/or
(b) the adjustment element is adjusted by closed-loop control at least until such time as an actual position of the adjustment element corresponds to a setpoint position of the adjustment element, and/or
(c) the volumetric flow divider (WV) divides up hydraulic fluid volume flows (FI, FII) to and/or from the hydraulic motors (RM1, RM2) of the two wheels (1, 2) in the ratio of setpoint rotational speeds for the at least two wheels (1, 2).

2. The drive system (100) according to Claim 1, **characterized in that** the variable locking differential function is variable in a manner dependent on a steering angle.

3. The drive system (100) according to Claim 1 or 2, **characterized in that** the variable locking differential function is configured to, during a cornering manoeuvre, slow a wheel of the two wheels (1, 2) that is rotating at too high a speed, preferably by reduction of a hydraulic fluid volume flow (FI, FII) to the hydraulic motor (RM1, RM2) of the wheel (1, 2) that is rotating at too high a speed, or by braking, by means of a braking intervention, of the wheel (1, 2) that is rotating at too high a speed.

4. The drive system (100) according to any one of the preceding claims, **characterized in that** the drive system (100) has a preferably electronic control device (FR) for controlling the variable locking differential function and/or for calculating a setpoint rotational speed for each of the two wheels (1, 2) for a cornering manoeuvre taking into consideration a steering angle of the motor vehicle.

5. The drive system (100) according to any one of the preceding claims, **characterized in that** the variable locking differential function is controllable in closed-loop fashion by means of a closed control loop.

6. The drive system (100) according to Claim 4, **characterized in that** the adjustment element is influenceable electroproportionally by means of the control device (FR).

7. The drive system (100) according to any one of the preceding claims, **characterized in that** the volumetric flow divider (WV) is implemented with or without an overrunning function.

8. The drive system (100) according to any one of the preceding claims, **characterized in that** an actuation of the adjustment element is performed by means of at least one electrically actuatable proportional magnet with hydraulic boosting and resetting by spring force, or is performed by means of at least one control valve (V1, V2), preferably a proportional valve, for controlling the hydraulic pressurization acting on the adjustment element and resetting by spring force.

9. The drive system (100) according to any one of the preceding claims, **characterized in that** a brake system (BR1, BR2) with selective braking intervention is responsible for the variable locking differential function.

10. The drive system (100) according to Claim 9, **characterized in that** the brake system (BR1, BR2) is adjusted by closed-loop control until such time as a ratio of actual rotational speeds for the at least two wheels (1, 2) corresponds to a ratio of setpoint rotational speeds for the at least two wheels (1, 2).

11. The drive system (100) according to Claim 9 or 10, **characterized in that** the drive system (100) has a closed control loop by means of which the brake system (BR1, BR2) is adjustable at least until such time as it has been set in accordance with at least one setpoint control variable.

12. The drive system (100) according to any one of the preceding claims, **characterized in that** the drive system (100) has a closed control loop by means of which
- the variable locking differential function is adjustable at least until such time as it has been set in accordance with at least one setpoint control variable, and/or
- the adjustment element is adjustable at least until such time as it has been set in accordance with at least one setpoint control variable.

13. The drive system (100) according to Claim 11 or 12, **characterized in that** a ratio of setpoint rotational speeds for the at least two wheels (1, 2) for a cornering manoeuvre serves as setpoint control variable, preferably for the variable locking differential function.

14. The drive system (100) according to any one of Claims 11 to 13, **characterized in that** the setpoint control variable, preferably for the variable locking differential function, is dynamic and changes in a manner dependent on a steering angle.

15. The drive system (100) according to any one of the preceding claims, **characterized by** at least one pump (P1, P2) which is operatively connected to the at least one hydraulic motor (RM1, RM2) and which has a constant displacement volume or variable displacement volume.

16. The drive system (100) according to Claim 15, wherein the at least one pump comprises a feed pump (P1) and/or a high-pressure pump (P2).

17. A motor vehicle having a drive system (100) according to any one of the preceding claims.

18. An operating method for a drive system (100) for a motor vehicle, in particular for reducing the understeer tendency of a motor vehicle and/or for allowing asynchronous rotational speeds for at least two wheels (1, 2) of the motor vehicle which are connected to one another via a locking differential function, preferably for a drive system (100) according to any one of Claims 1 to 16, wherein the drive system (100) has:
- at least one first axle, which is preferably mechanically driveable by means of a drivetrain,
- at least one second axle, which is assigned at least two hydraulic motors (RM1, RM2) for driving at least two wheels (1, 2) of the motor vehicle, and
- a locking differential function for traction compensation for the at least two wheels (1, 2),
wherein
- the locking differential function operates variably and allows different rotational speeds for the at least two wheels (1, 2) during a cornering manoeuvre of the motor vehicle, and
- a hydraulic volumetric flow divider (WV) with an adjustment element is responsible for the variable locking differential function, and preferably, the adjustment element allows variable splitting of a hydraulic fluid volume flow (FI, FII) to the hydraulic motors,
**characterized in that**
(a) the adjustment element is adjusted by closed-loop control at least until such time as a ratio of actual rotational speeds for the at least two wheels (1, 2) corresponds to a ratio of setpoint rotational speeds for the at least two wheels (1, 2), and/or
(b) the adjustment element is adjusted by closed-loop control at least until such time as an actual position of the adjustment element corresponds to a setpoint position of the adjustment element, and/or
(c) the volumetric flow divider (WV) divides up hydraulic fluid volume flows (FI, FII) to and/or from the hydraulic motors (RM1, RM2) of the two wheels (1, 2) in the ratio of setpoint rotational speeds for the at least two wheels (1, 2).

## Revendications

1. Système d'entraînement (100) pour un véhicule automobile, de préférence pour réduire la tendance au sous-virage d'un véhicule automobile et/ou pour permettre des vitesses de rotation asynchrones pour au moins deux roues (1, 2) du véhicule automobile, reliées l'une à l'autre par une fonction de différentiel à blocage, comprenant :
- au moins un premier essieu qui peut de préférence être entraîné par l'intermédiaire d'une chaîne cinématique,
- au moins un deuxième essieu qui est associé à au moins deux moteurs hydrauliques (RM1, RM2) destinés à entraîner au moins deux roues (1, 2) du véhicule automobile, et
- une fonction de différentiel à blocage destinée à compenser la traction pour les au moins deux roues (1, 2),
dans lequel
- la fonction de différentiel à blocage est variable afin de permettre différentes vitesses de rotation pour les au moins deux roues (1, 2) pendant un déplacement en virage du véhicule automobile, et
- un diviseur de débit massique hydraulique (WV) doté d'un élément de réglage est chargé de la fonction de différentiel à blocage variable, et l'élément de réglage permet de préférence une répartition variable d'un débit volumique de liquide hydraulique (FI, FII) sur les moteurs hydrauliques,
**caractérisé en ce que**
(a) l'élément de réglage est régulé au moins jusqu'à ce qu'un rapport de vitesses de rotation réelles pour les au moins deux roues (1, 2) corresponde à un rapport de vitesses de rotation théoriques pour les au moins deux roues (1, 2), et/ou
(b) l'élément de réglage est régulé au moins jusqu'à ce qu'une position réelle de l'élément de réglage corresponde à une position théorique de l'élément de réglage, et/ou
(c) le diviseur de débit massique (WV) divise les débits volumiques de fluide hydraulique (FI, FII) à destination et/ou en provenance des moteurs hydrauliques (RM1, RM2) des deux roues (1, 2) selon le rapport de vitesses de rotation théoriques pour les au moins deux roues (1, 2).

2. Système d'entraînement (100) selon la revendication 1, **caractérisé en ce que** la fonction de différentiel à blocage variable est variable en fonction de l'angle de braquage.

3. Système d'entraînement (100) selon la revendication 1 ou 2, **caractérisé en ce que** la fonction de différentiel à blocage variable est effectuée pour ralentir pendant un déplacement en virage une roue tournant trop vite parmi les deux roues (1, 2), de préférence par la réduction d'un débit volumique de liquide hydraulique (FI, FII) vers le moteur hydraulique (RM1, RM2) de la roue tournant trop vite (1, 2) ou par le freinage au moyen d'une intervention de freinage sur la roue tournant trop vite (1, 2).

4. Système d'entraînement (100) selon l'une quelconque des revendications précédentes, **caractérisé en ce que** le système d'entraînement (100) présente un dispositif de commande (FR), de préférence électronique, pour commander la fonction de différentiel à blocage variable et/ou pour calculer une vitesse de rotation théorique pour chacune des deux roues (1, 2) pour un déplacement en virage en tenant compte d'un angle de braquage du véhicule automobile.

5. Système d'entraînement (100) selon l'une quelconque des revendications précédentes, **caractérisé en ce que** la fonction de différentiel à blocage variable peut être régulée par une boucle de régulation fermée.

6. Système d'entraînement (100) selon la revendication 4, **caractérisé en ce que** l'élément de réglage peut être influencé par le dispositif de commande (FR) de manière électriquement proportionnelle.

7. Système d'entraînement (100) selon l'une quelconque des revendications précédentes, **caractérisé en ce que** le diviseur de débit massique (WV) est réalisé avec ou sans fonction roue libre.

8. Système d'entraînement (100) selon l'une quelconque des revendications précédentes, **caractérisé en ce qu'**un pilotage de l'élément de réglage est effectué par au moins un aimant proportionnel à amplification hydraulique et rappel par ressort, pouvant être piloté électriquement, ou par au moins une vanne de commande (V1, V2), de préférence une vanne proportionnelle, pour commander l'application de pression hydraulique agissant sur l'élément de réglage et le rappel par ressort.

9. Système d'entraînement (100) selon l'une quelconque des revendications précédentes, **caractérisé en ce qu'**un système de freinage (BR1, BR2) doté d'une intervention de freinage sélective est chargé de la fonction de différentiel à blocage variable.

10. Système d'entraînement (100) selon la revendication 9, **caractérisé en ce que** le système de freinage (BR1, BR2) est régulé jusqu'à ce qu'un rapport de vitesses de rotation réelles pour les au moins deux roues (1, 2) corresponde à un rapport de vitesses de rotation théoriques pour les au moins deux roues (1, 2) .

11. Système d'entraînement (100) selon la revendication 9 ou 10, **caractérisé en ce que** le système d'entraînement (100) présente une boucle de régulation fermée par laquelle le système de freinage (BR1, BR2) peut être régulé au moins jusqu'à ce qu'il soit réglé selon au moins une grandeur de commande théorique.

12. Système d'entraînement (100) selon l'une quelconque des revendications précédentes, **caractérisé en ce que** le système d'entraînement (100) présente une boucle de régulation fermée par laquelle
- la fonction de différentiel à blocage variable peut être régulée au moins jusqu'à ce qu'elle soit réglée selon au moins une grandeur de commande théorique, et/ou
- l'élément de réglage peut être régulé au moins jusqu'à ce qu'il soit réglé selon au moins une grandeur de commande théorique.

13. Système d'entraînement (100) selon la revendication 11 ou 12, **caractérisé en ce qu'**un rapport de vitesses de rotation théoriques pour les au moins deux roues (1, 2) pour un déplacement en virage sert de grandeur de commande théorique, de préférence pour la fonction de différentiel à blocage variable.

14. Système d'entraînement (100) selon l'une quelconque des revendications 11 à 13, **caractérisé en ce que** la grandeur de commande théorique est dynamique, de préférence pour la fonction de différentiel à blocage variable, et varie en fonction de l'angle de braquage.

15. Système d'entraînement (100) selon l'une quelconque des revendications précédentes, **caractérisé par** au moins une pompe (P1, P2) à volume d'absorption constant ou à volume d'absorption variable, en relation active avec ledit au moins un moteur hydraulique (RM1, RM2).

16. Système d'entraînement (100) selon la revendication 15, dans lequel ladite au moins une pompe comprend une pompe d'alimentation (P1) et/ou une pompe haute pression (P2).

17. Véhicule automobile, comprenant un système d'entraînement (100) selon l'une quelconque des revendications précédentes.

18. Procédé d'exploitation pour un système d'entraînement (100) pour un véhicule automobile, en particulier pour réduire la tendance au sous-virage d'un véhicule automobile et/ou pour permettre des vitesses de rotation asynchrones pour au moins deux roues (1, 2) du véhicule automobile reliées l'une à l'autre par une fonction de différentiel à blocage, de préférence pour un système d'entraînement (100) selon l'une quelconque des revendications 1 à 16, le système d'entraînement (100) présentant :
- au moins un premier essieu qui peut être entraîné mécaniquement de préférence par une chaîne cinématique,
- au moins un deuxième essieu qui est associé à au moins deux moteurs hydrauliques (RM1, RM2) destinés à entraîner au moins deux roues (1, 2) du véhicule automobile, et
- une fonction de différentiel à blocage destinée à compenser la traction pour les au moins deux roues (1, 2),
dans lequel
- la fonction de différentiel à blocage est variable afin de permettre différentes vitesses de rotation pour les au moins deux roues (1, 2) pendant un déplacement en virage du véhicule automobile, et
- un diviseur de débit massique hydraulique (WV) doté d'un élément de réglage est en charge de la fonction de différentiel à blocage variable, et l'élément de réglage permet de préférence une répartition variable d'un débit volumique de liquide hydraulique (FI, FII) sur les moteurs hydrauliques,
**caractérisé en ce que**
(a) l'élément de réglage est régulé au moins jusqu'à ce qu'un rapport de vitesses de rotation réelles pour les au moins deux roues (1, 2) corresponde à un rapport de vitesses de rotation théoriques pour les au moins deux roues (1, 2), et/ou
(b) l'élément de réglage est régulé au moins jusqu'à ce qu'une position réelle de l'élément de réglage corresponde à une position théorique de l'élément de réglage, et/ou
(c) le diviseur de débit massique (WV) divise les débits volumiques de fluide hydraulique (FI, FII) à destination et/ou en provenance des moteurs hydrauliques (RM1, RM2) des deux roues (1, 2) selon le rapport de vitesses de rotation théoriques pour les au moins deux roues (1, 2).
